# EUROPEAN PATENT SPECIFICATION

(11) **EP 1 726 855 B1**
(45) Date of publication and mention of the grant of the patent: **27.04.2011**
(21) Application number: 06388036.3
(22) Date of filing: 24.05.2006
(51) Int. Cl.: F16K 7/17, F16K 37/00

(54) **Feedstuff valve with an integrated leak sensor**
Nahrungsmittelventil mit einem integrierten Leckstelle- Sensor
Valve pour produits alimentaires avec une sonde de fuite intégrée

(30) Priority: 25.05.2005 DK 200500119
(43) Date of publication of application: 29.11.2006
(73) Proprietor: Big Dutchman (Skandinavien) A/S, 6600 Vejen (DK)
(72) Inventor: Pedersen, Niels Ole, 6600 Vejen (DK)
(74) Representative: Olsen, Lau Lund

(56) References cited:
- EP-A- 1 462 693
- WO-A-2005/036039
- DE-A1- 4 330 483
- JP-A- 6 101 774
- JP-A- 56 014 672

## Description

The present invention relates to a feedstuff valve for use in automatic feeding plants within the agricultural sector, comprising an inlet pipe, an outlet pipe and a membrane adapted to keep the valve closed.

The feedstuff valves used today are almost all of the membrane valve type, in which a rubber membrane keeps the valve closed by means of compressed air.

They all have the disadvantage that eventually the membrane will crack as it becomes worn out, so that the compressed air used for closing may be transmitted to the feedstuff pipes with resulting operational failure.

It is a known problem that when a membrane valve becomes leaky, it begins with a very small hole, and as the hole is situated inside the valve, the defective valve cannot be located conventionally, e.g. by use of an acoustic listening device. To find the defective valve, these must be investigated individually, which is done by disconnecting the supply of compressed air for the individual valve and then checking if the consumption of compressed air is reduced. As a feeding plant may contain several hundred valves, this is a very time-consuming procedure.

It has therefore been desired to provide, a method for automatic detection of defective valves.

In WO2005/036039 it has been attempted to solve this by arranging a sensor unit directly on the membrane in order to detect cracks etc. With this system, it is necessary to use very sophisticated sensors or to use several sensors on a single membrane. It is therefore the object of the invention to provide a robust detection of a leakage independently of the reason for it.

To this end, an automatic leak sensor is integrated in the feedstuff valve, said sensor unit comprising a flowmeter for measuring the amount of air or gas passing through the leaky valve membrane.

By integrating a suitable sensor into the feedstuff valve, this will send a signal to the control unit of the feeding plant if a leak is discovered. As each feedstuff valve has its own unique number, the signal will contain information about the particular leaky valve, and this means that much time is saved on mending the defect.

In an embodiment, the feedstuff valve has an integrated sensor unit for detecting if the valve membrane is leaky, which indicates this on an integrated indicator of the feedstuff valve.

In an embodiment, the flowmeter comprises a Wheatstone bridge.

In an embodiment, the Wheatstone bridge is composed by a measuring resistor that is placed directly in a gasflow through a measuring chamber, a reference resistor that is placed in more stationary gas, two supplementary resistors, each connected in series with the measuring resistor and the reference resistor, respectively, and an enhancer adapted to enhance a voltage difference resulting from a difference in electric resistance of the measuring resistor and the reference resistor.

In an embodiment, the measuring chamber is separated by means of a circuit board into an inlet portion and an outlet portion, in which the circuit board is provided with a gasflow aperture, in which the measuring resistor is located on the circuit board in front of the gasflow aperture in the outlet portion of the measuring chamber, and the reference resistor is located on the circuit board at a distance from the gasflow aperture in the inlet portion of the measuring chamber.

In an embodiment, the measuring chamber is composed by to housing parts clamped together, thereby sandwiching the circuit board in between, each housing part abutting the circuit board by means of an intermediate O-ring.

In the following, the invention will be explained in more detail by means of examples of embodiments with reference to the schematic drawings, in which
Fig. 1 shows a known feedstuff valve of the membrane type,
Fig. 2 shows an embodiment of the feedstuff valve according to the invention,
Figs. 3, 4 and 5 show examples of feedstuff valves not part of the invention
Fig. 6 shows a diagram of the flowmeter 5, and
Fig. 7 shows a cross-section through the flowmeter of Fig. 6 built into a housing.

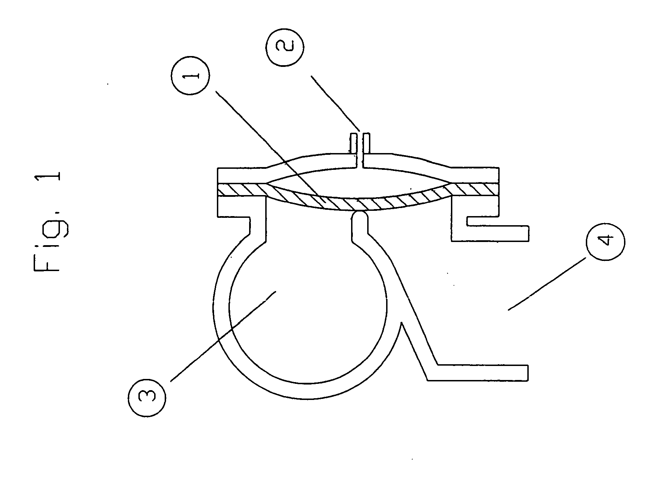

The feedstuff valves used today are almost all of the membrane valve type; see Fig. 1.

According to the invention, the feedstuff valve has an integrated sensor unit for detecting if the valve membrane 1 is leaky, and which sends information about this to an external unit.

The feedstuff valve has an integrated sensor unit for detecting if the valve membrane 1 is leaky, and which indicates this on an integrated indicator of the feedstuff valve.

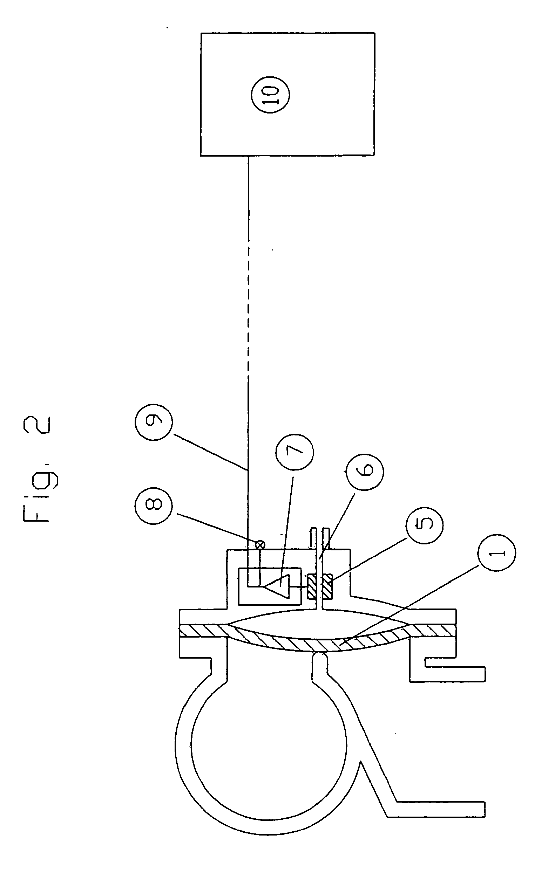

Fig. 2 shows a feedstuff valve in which a flowmeter 5 is used for measuring the amount of air or any other suitable gas flowing in to the membrane 1 through the air channel 6. The sensor unit comprises the flowmeter 5 for measuring the amount of air passing through the leaky valve membrane 1. The signal from the flowmeter 5 is sent to the integrated electronic amplifier 7, and if unusual air consumption is detected, the signal is forwarded to the control unit 10 of the feeding plant via the cable 9, and at the same time the defect is indicated by the indicator lamp 8. Each time the feedstuff valve opens or closes, a brief airflow occurs in the air channel 6, and by measuring this it is possible to detect whether the feedstuff valve is reacting correctly to the control signal from the control unit 10 of the feeding plant. If a constant airflow is measured, it is a sign of a leaky membrane.

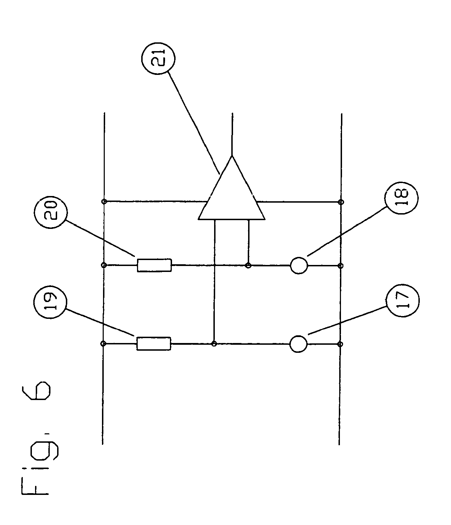

Fig. 6 shows the flowmeter 5 in greater detail. Together with the supplementary resistors 19 and 20, the measuring resistor 17 and the reference resistor 18 form a Wheatstone bridge. When a voltage is applied to this measuring bridge, an electric power will be consumed by the measuring resistor 17 and the reference resistor 18, and they will be heated until their emission of heat to the surrounding air is equal to the added electric power. If the resistors 17, 18 are equally warm, their electric resistance will be the same, and the measuring bridge will be balanced. If the measuring resistor 17 is cooled by passing air, its electric resistance will be different from the resistance of the reference resistor 18 located in stationary air, and thereby the measuring bridge is set out of balance. This imbalance results in a voltage difference, which will be detected and enhanced in the enhancer 21 and sent to the control unit 10 of the feeding plant.

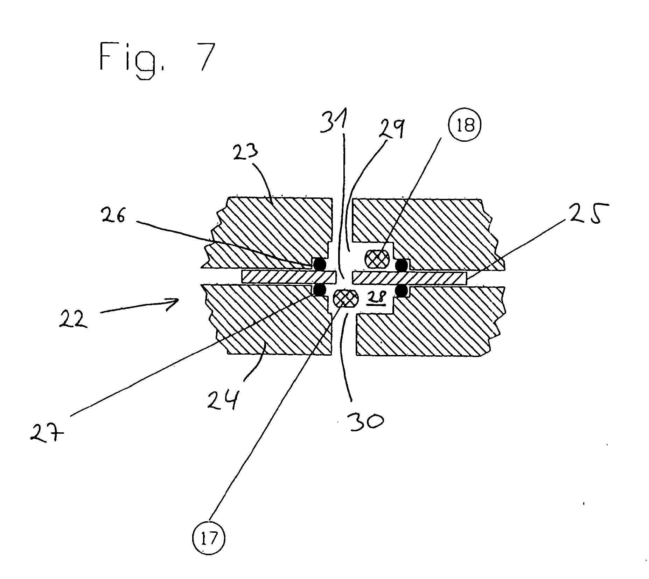

Fig. 7 shows an example of how the flowmeter outlined in Fig. 6 may be built into a housing 22. The housing 22 is composed by two parts 23, 24 clamped together with a circuit board 25 in between. Each housing part 23, 24 is sealed against the circuit board 25 by means of an O-ring 26, 27 and forms a measuring chamber 28 separated into an inlet portion 29 and an outlet portion 30 by means of the circuit board 25. The inlet portion 29 and the outlet portion 30 of the measuring chamber 28 are connected by means of a gasflow aperture 31 in the circuit board 25. The measuring resistor 17 is placed on the circuit board 25 in the outlet portion 30 of the measuring chamber 28 directly over the gasflow aperture 31, in the airflow through the measuring chamber 28, whereas the reference resistor 18 is placed in more stationary air on the circuit board 25 in the inlet portion 29 of the measuring chamber 28 at a distance from the gasflow aperture 31. The resistors may be protected by a glass coating.

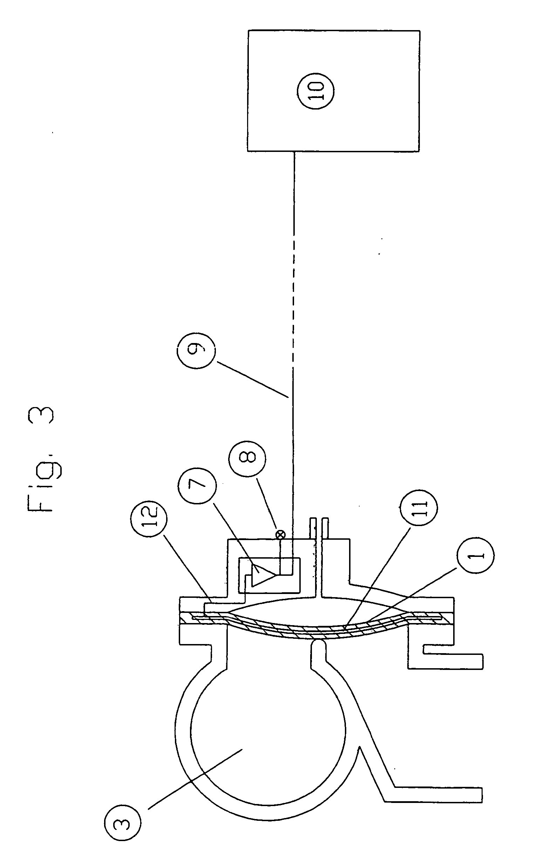

Fig. 3 shows a feedstuff valve, in which the electric conductivity inside the membrane is measured. The sensor unit comprises a conductivity meter for detection of the moisture permeating the leaky valve membrane 1. In case of a leak in the membrane 1, capillarity can cause moisture to permeate from the feedstuff in the pipe 3 to a layer encapsulated in the membrane 11, which will become electrically conductive. When this happens, the signal runs through the connection 12 to the electronic amplifier 7 and from here the signal is forwarded to the control unit 10 while the defect is indicated by the indicator lamp 8.

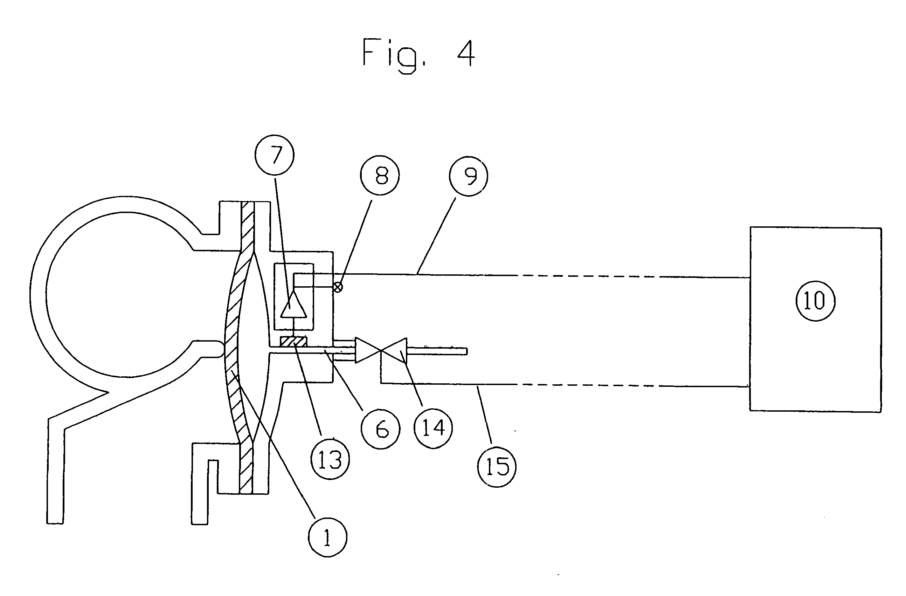

Fig. 4 shows an example of using a pressure sensor. The sensor unit comprises a pressure gauge for registration of the pressure drop arising because of a leaky valve membrane 1. When a measurement is to be taken, the solenoid valve 14 blocks the air supply for the membrane 1. If the air pressure of the channel 6 changes when the air supply is blocked, it is a sign of a leaky membrane, and the changed air pressure is detected by the pressure sensor 13 and the electronic amplifier 7, which forwards the signal to the control unit 10 of the feeding plant, while the defect is indicated by the indicator lamp 8.

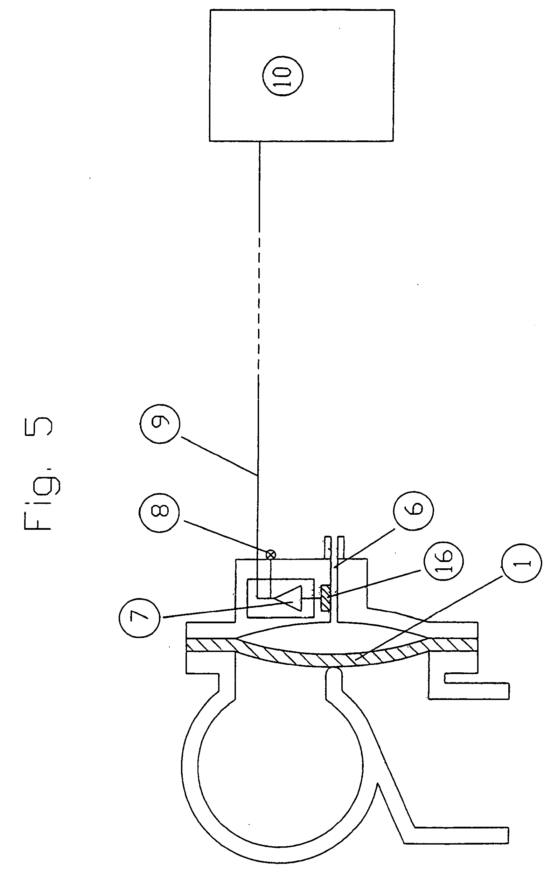

Fig. 5 shows a feedstuff valve, in which a microphone is used. The sensor unit comprises a microphone for registration of the noise arising because of a leaky valve membrane 1. When air passes through a small opening under high pressure, noise in the form of ultrasound will be generated. By placing a microphone 16 inside the air channel 6 it is possible to detect the noise produced. The signal from the microphone 16 is sent to an electronic amplifier 7, which in case of a leak forwards the signal to the control unit 10 of the feeding plant, while the defect is indicated by the indicator lamp 8.

### Reference numbers

- 1: Membrane
- 2: Inlet of control air
- 3: Inlet pipe for feedstuff
- 4: Outlet pipe for feedstuff
- 5: Flowmeter
- 6: Air channel
- 7: Electronic amplifiers
- 8: Leak indicators
- 9: Signal cable
- 10: Control unit
- 11: Electrically conductive layer
- 12: Signal cable
- 13: Pressure sensor
- 14: Solenoid valve
- 15: Control cable
- 16: Microphone
- 17: Measuring resistor
- 18: Reference resistor
- 19: Supplementary resistor
- 20: Supplementary resistor
- 21: Enhancer
- 22: Housing
- 23, 24: Housing parts
- 25: Circuit board
- 26, 27: O-rings
- 28: Measuring chamber
- 29: Inlet portion of housing
- 30: Outlet portion of housing
- 31: Gasflow aperture

## Claims

1. A feedstuff valve comprising an inlet pipe (3), an outlet pipe (4), a membrane (1) adapted to keep the valve closed by means of air or any other suitable gas and an integrated sensor unit for detecting if the valve membrane (1) is leaky, and which sends information about this to an external unit **characterized in that** it comprises an air channel (6) through which air or any other suitable gas flows in to the membrane (1), and that the sensor unit comprises a flowmeter (5) for measuring the amount of air or gas passing through the leaky valve membrane (1).

2. A feedstuff valve according to claim 1, **characterized in that** it has an integrated sensor unit for detecting if the valve membrane (1) is leaky, and which indicates this on an integrated indicator of the feedstuff valve.

3. A feedstuff valve according to claim 2, in which the flowmeter (5) comprises a Wheatstone bridge.

4. A feedstuff valve according to claim 3, in which the Wheatstone bridge is composed by a measuring resistor (17) that is placed directly in a gasflow through a measuring chamber (28), a reference resistor (18) that is placed in more stationary gas, two supplementary resistors (19, 20), each connected in series with the measuring resistor (17) and the reference resistor (18), respectively, and an enhancer (21) adapted to enhance a voltage difference resulting from a difference in electric resistance of the measuring resistor (17) and the reference resistor (18).

5. A feedstuff valve according to claim 4, in which the measuring chamber (28) is separated by means of a circuit board (25) into an inlet portion (29) and an outlet portion (30), in which the circuit board (25) is provided with a gasflow aperture (31), in which the measuring resistor (17) is located on the circuit board (25) in front of the gasflow aperture (31) in the outlet portion (30) of the measuring chamber (28), and the reference resistor (18) is located on the circuit board (25) at a distance from the gasflow aperture (31) in the inlet portion (29) of the measuring chamber (28).

6. A feedstuff valve according to claim 5, in which the measuring chamber (28) is composed by to housing parts (23, 24) clamped together, thereby sandwiching the circuit board (25) in between, each housing part (23, 24) abutting the circuit board (25) by means of an intermediate O-ring (26, 27).

7. A method for detecting a leak in a membrane (1) in a feedstuff valve, where the membrane is being adapted to keep a feedstuff valve closed by means of air and where the valve comprises an inlet pipe (3), an outlet pipe (4) and an integrated sensor unit (6), which sends information about leaks to an external unit, **characterized in that** air is allowed to flow in to the membrane (1) through an air channel (6), and that the amount of air passing through the leaky valve membrane (1) is measured using a flowmeter (5) in the sensor unit.

8. A method according to claim 7, **characterized in that** an integrated sensor unit is used for detecting if the valve membrane (1) is leaky, and that this is indicated on an integrated indicator of the feedstuff valve.

9. A method according to claim 7 or 8, in which a Wheatstone bridge is used for measuring the flow (5).

10. A method according to claim 9, **characterized in that** a measuring resistor (17) of the Wheatstone bridge is placed directly in a gasflow through a measuring chamber (28), that a reference resistor (18) is placed in more stationary gas, that two supplementary resistors (19, 20) are each connected in series with the measuring resistor (17) and the reference resistor (18), respectively, and that an enhancer (21) is used to enhance a voltage difference resulting from a difference in electric resistance of the measuring resistor (17) and the reference resistor (18).

## Patentansprüche

1. Nahrungsmittelventil mit einem Einlassrohr (3), einem Auslassrohr (4), einer Membran (1), die dazu ausgebildet ist, das Ventil mittels Luft oder eines beliebigen geeigneten Gases geschlossen zu halten, und mit einer integrierten Sensoreinheit zum Feststellen, ob die Ventilmembran (1) undicht ist, wobei die Sensoreinheit Information hierüber zu einer externen Einheit schickt,
**dadurch gekennzeichnet, dass** es einen Luftkanal (6) aufweist, durch den Luft oder ein beliebiges anderes geeignetes Gas zu der Membran (1) einströmt, und dass die Sensoreinheit einen Durchflussmesser (5) zum Messen der Menge an Luft oder Gas aufweist, die durch die undichte Membran (1) hindurch tritt.

2. Nahrungsmittelventil nach Anspruch 1,
**dadurch gekennzeichnet, dass** es eine integrierte Sensoreinheit aufweist, um festzustellen, ob die Ventilmembran (1) undicht ist, wobei die Sensoreinheit dies auf einer integrierten Anzeige des Nahrungsmittelventils anzeigt.

3. Nahrungsmittelventil nach Anspruch 2,
wobei der Durchflussmesser (5) eine Wheatstone'sche Brücke aufweist.

4. Nahrungsmittelventil nach Anspruch 3,
wobei die Wheatstone'sche Brücke gebildet ist durch einen Messwiderstand (17), der direkt in einer Gasströmung durch eine Messkammer (28) platziert ist, einen Referenzwiderstand (18), der in stationärerem Gas platziert ist, zwei zusätzlichen Widerständen (19, 20), die mit dem Messwiderstand (17) bzw. dem Referenzwiderstand (18) jeweils in Reihe geschaltet sind, sowie einen Verstärker (21), der zum Verstärken einer Spannungsdifferenz ausgebildet ist, die aus einer Differenz bei dem elektrischen Widerstandswert des Messwiderstands (17) und des Referenzwiderstands (18) resultiert.

5. Nahrungsmittelventil nach Anspruch 4,
wobei die Messkammer (28) mittels einer Leiterplatte (25) in einen Einlassbereich (29) und einen Auslassbereich (30) separiert ist, wobei die Leiterplatte (25) mit einer Gasströmungsöffnung (31) versehen ist, und wobei sich der Messwiderstand (17) auf der Leiterplatte (25) vor der Gasströmungsöffnung (31) in dem Auslassbereich (30) der Messkammer (28) befindet und sich der Referenzwiderstand (18) auf der Leiterplatte (25) in einem Abstand von der Gasströmungsöffnung (31) in dem Einlassbereich (29) der Messkammer (28) befindet.

6. Nahrungsmittelventil nach Anspruch 5,
wobei die Messkammer (28) durch zwei Gehäuseteile (23, 24) gebildet ist, die zusammen geklemmt sind und dadurch die Leiterplatte (25) sandwichartig zwischen sich schließen, wobei jedes Gehäuseteil (23, 24) mittels eines zwischengeordneten O-Rings (26, 27) an der Leiterplatte (25) anliegt.

7. Verfahren zum Feststellen eines Lecks in einer Membran (1) in einem Nahrungsmittelventil, wobei die Membran dazu ausgebildet ist, ein Nahrungsmittelventil mittels Luft geschlossen zu halten und wobei das Ventil ein Einlassrohr (3), ein Auslassrohr (4) und eine integrierte Sensoreinheit (6) aufweist, die Information über Leckagen zu einer externen Einheit schickt,
**dadurch gekennzeichnet, dass** man Luft durch einen Luftkanal (6) zu der Membran (1) einströmen lässt, und dass die Menge an Luft, die durch die undichte Ventilmembran (1) hindurch tritt, unter Verwendung eines Durchflussmessers (5) in der Sensoreinheit gemessen wird.

8. Verfahren nach Anspruch 7,
**dadurch gekennzeichnet, dass** eine integrierte Sensoreinheit für die Feststellung verwendet wird, ob die Ventilmembran (1) undicht ist, und dass dies auf einer integrierten Anzeige des Nahrungsmittelventils angezeigt wird.

9. Verfahren nach Anspruch 7 oder 8,
wobei eine Wheatstone'sche Brücke zum Messen der Strömung (5) verwendet wird.

10. Verfahren nach Anspruch 9,
**dadurch gekennzeichnet, dass** ein Messwiderstand (17) der Wheatstone'schen Brücke direkt in einer Gasströmung durch eine Messkammer (28) platziert wird, dass ein Referenzwiderstand (18) in stationärerem Gas platziert wird, dass zwei zusätzliche Widerständen (19, 20) mit dem Messwiderstand (17) bzw. dem Referenzwiderstand (18) jeweils in Reihe geschaltet werden, und dass ein Verstärker (21) zum Verstärken einer Spannungsdifferenz verwendet wird, die aus einer Differenz bei dem elektrischen Widerstandswert des Messwiderstands (17) und des Referenzwiderstands (18) resultiert.

## Revendications

1. Valve pour produits alimentaires, comprenant un tuyau d'admission (3), un tuyau de sortie (4), une membrane (1) destinée à maintenir ladite valve fermée sous l'effet de l'air ou de n'importe quel autre gaz adéquat, et une unité détectrice intégrée qui est conçue pour détecter si la membrane (1) de ladite valve est dénuée d'étanchéité, et qui délivre des informations corrélatives à une unité extérieure, **caractérisée par le fait qu'**elle comprend un conduit à air (6) par l'intermédiaire duquel de l'air, ou n'importe quel autre gaz adéquat, afflue en direction de la membrane (1) ; et **par le fait que** l'unité détectrice comprend un débitmètre (5) pour mesurer la quantité d'air ou de gaz circulant à travers ladite membrane (1) de ladite valve, dénuée d'étanchéité.

2. Valve pour produits alimentaires, selon la revendication 1, **caractérisée par le fait qu'**elle comporte une unité détectrice intégrée qui est conçue pour détecter si la membrane (1) de ladite valve est dénuée d'étanchéité, et qui indique cet état sur un indicateur intégré de ladite valve pour produits alimentaires.

3. Valve pour produits alimentaires, selon la revendication 2, dans laquelle le débitmètre (5) comprend un pont de Wheatstone.

4. Valve pour produits alimentaires, selon la revendication 3, dans laquelle le pont de Wheatstone est composé d'une résistance de mesure (17) qui est placée directement dans un écoulement gazeux en circulation par une chambre de mesure (28) ; d'une résistance de référence (18) qui est placée dans un gaz plus stationnaire ; de deux résistances supplémentaires (19, 20) dont chacune est respectivement connectée, en série, à ladite résistance de mesure (17) et à ladite résistance de référence (18) ; et d'un augmentateur (21), conçu pour accroître une différence de tension résultant d'une différence dans la résistance électrique de ladite résistance de mesure (17) et de ladite résistance de référence (18).

5. Valve pour produits alimentaires, selon la revendication 4, dans laquelle la chambre de mesure (28) est scindée, au moyen d'une plaquette (25) à circuits imprimés, en une zone d'admission (29) et en une zone de sortie (30) ; dans laquelle ladite plaquette (25) à circuits imprimés est pourvue d'un orifice (31) d'écoulement gazeux ; dans laquelle la résistance de mesure (17) est située, sur la plaquette (25) à circuits imprimés, en regard de l'orifice (31) d'écoulement gazeux dans la zone de sortie (30) de la chambre de mesure (28) ; et la résistance de référence (18) est située, sur ladite plaquette (25) à circuits imprimés, à distance de l'orifice (31) d'écoulement gazeux dans la zone d'admission (29) de ladite chambre de mesure (28).

6. Valve pour produits alimentaires, selon la revendication 5, dans laquelle la chambre de mesure (28) est composée de deux parties de boîtier (23, 24) serrées conjointement, prenant ainsi en sandwich la plaquette (25) à circuits imprimés, chaque partie de boîtier (23, 24) étant en butée contre ladite plaquette (25) à circuits imprimés au moyen d'une bague torique intercalaire (26, 27).

7. Procédé pour détecter une fuite dans une membrane (1), dans une valve pour produits alimentaires, ladite membrane étant destinée à maintenir une valve pour produits alimentaires à l'état fermé, sous l'effet de l'air, et ladite valve comprenant un tuyau d'admission (3), un tuyau de sortie (4) et une unité détectrice intégrée (6) qui délivre, à une unité extérieure, des informations relatives à des fuites, **caractérisé par le fait que** de l'air est autorisé à affluer vers la membrane (1) en empruntant un conduit d'air (6) ; et **par le fait que** la quantité d'air circulant à travers ladite membrane (1) de la valve, dénuée d'étanchéité, est mesurée en utilisant un débitmètre (5) dans l'unité détectrice.

8. Procédé selon la revendication 7, **caractérisé par le fait qu'**une unité détectrice intégrée est utilisée pour détecter si la membrane (1) de la valve est dénuée d'étanchéité ; et **par le fait que** cet état est indiqué sur un indicateur intégré de ladite valve pour produits alimentaires.

9. Procédé selon la revendication 7 ou 8, **caractérisé par le fait qu'**un pont de Wheatstone est utilisé pour mesurer l'écoulement (5).

10. Procédé selon la revendication 9, **caractérisé par le fait qu'**une résistance de mesure (17) du pont de Wheatstone est placée directement dans un écoulement gazeux en circulation par une chambre de mesure (28) ; **par le fait qu'**une résistance de référence (18) est placée dans un gaz plus stationnaire ; **par le fait que** deux résistances supplémentaires (19, 20) sont chacune respectivement connectées, en série, à ladite résistance de mesure (17) et à ladite résistance de référence (18) ; et **par le fait qu'**un augmentateur (21) est utilisé pour accroître une différence de tension résultant d'une différence dans la résistance électrique de ladite résistance de mesure (17) et de ladite résistance de référence (18).
